# EUROPÄISCHE PATENTSCHRIFT

(11) **EP 1 574 835 B1**
(45) Veröffentlichungstag und Bekanntmachung des Hinweises auf die Patenterteilung: **25.03.2009**
(21) Anmeldenummer: 05100115.4
(22) Anmeldetag: 11.01.2005
(51) Int. Cl.: G01M 15/00

(54) **Verfahren und Steuergerät zum Bereinigen eines Drehzahlsignals**
Method and controlling device for speed signal conditioning
Méthode et dispositif de contrôle pour conditionner un signal de vitesse de rotation

(30) Priorität: 01.03.2004 DE 102004010413
(43) Veröffentlichungstag der Anmeldung: 14.09.2005
(73) Patentinhaber: ROBERT BOSCH GMBH, 70442 Stuttgart (DE)
(72) Erfinder: Damitz, Jens, 75428, Illingen (DE); Skala, Peter, 71732, Tamm (DE); Palmer, Joachim, 70825, Korntal-Muenchingen (DE); Fehrmann, Ruediger, 71229, Leonberg (DE)

(56) Entgegenhaltungen:
- DE-A1- 4 445 684
- DE-A1- 10 214 833
- DE-A1- 19 622 042
- DE-A1- 19 622 448
- DE-A1- 19 713 182
- DE-A1- 19 814 732
- DE-A1- 19 942 144
- US-A- 4 843 870
- US-A- 5 487 008
- US-A- 5 499 537
- US-A- 5 633 456
- US-A- 5 689 065
- US-A- 5 747 679
- US-A- 5 893 897
- US-A1- 2003 163 242
- US-B1- 6 314 802
- US-B1- 6 357 287

## Beschreibung

Die Erfindung betrifft ein Verfahren zum Bereinigen eines Drehzahlsignals, welches die aktuelle Drehzahl der Kurbelwelle einer Brennkraftmaschine repräsentiert durch Subtrahieren eines Kompensationssignals. Das Kompensationssignal repräsentiert Torsionsschwingungen der Kurbelwelle. Die Erfindung betrifft darüber hinaus ein Computerprogramm und ein Steuergerät zum Durchführen dieses Verfahrens sowie eine Laufruhenregelung für die Brennkraftmaschine als bevorzugte Anwendung für das bereinigte Drehzahlsignal.

### Stand der Technik

Aus dem Stand der Technik, insbesondere der DE 196 22 448 A1 oder der DE 198 14 732 A1 ist ein Verfahren zur hoch aufgelösten Erfassung der Drehzahl einer mehrzylindrigen Brennkraftmaschine bekannt. Das dort offenbarte Verfahren dient insbesondere zur Erkennung von Verbrennungsaussetzern. In der besagten Druckschrift ist beschrieben, dass vornehmlich bei hohen Drehzahlen während eines befeuerten Betriebs einer Brennkraftmaschine Torsionsschwingungen der Kurbelwelle auftreten können, die sich dann deren Drehbewegung überlagern und ein entsprechendes Drehzahlsignal verfälschen. In verfälschtem Zustand ist das Drehzahlsignal weder für eine Erkennung von Aussetzern noch als Maß für die Laufruhe der Brennkraftmaschine gut geeignet. Es wird deshalb vorgeschlagen, das erfasste Drehzahlsignal mit Hilfe zylinderindividueller Korrekturwerte zu korrigieren. Diese Korrekturwerte werden bei befeuertem Betrieb der Brennkraftmaschine individuell für verschiedene Motorentypen empirisch durch das Verhalten entsprechender Versuchsmotoren bestimmt.

Weiterhin ist es Stand der Technik, dass zumindest einzelne Steuergeräte der Fa. Robert Bosch GmbH eine Laufruhenregelung für Brennkraftmaschinen aufweisen, welche jeweils ein bereinigtes Drehzahlsignal auswertet. Dabei wird das bereinigte Drehzahlsignal, welches die aktuelle Drehzahl der Kurbelwelle der Brennkraftmaschine repräsentiert, durch Subtrahieren eines jeweils aktuell generierten Torsionsschwingungs-Kompensationssignals von dem Drehzahlsignal gebildet. Das Torsionsschwingungs-Kompensationssignal repräsentiert dabei Torsionsschwingungen der Kurbelwelle, insbesondere während eines unbefeuerten Schubbetriebs der Brennkraftmaschine und stellt somit nur eine Teilkompensation dar.

US 2003/0163242 A1 beschreibt ein Verfahren zum Erkennen von Verbrennungsaussetzern, bei dem ein Fahrzustand auf unebener Straße, der das Erkennen von Verbrennungsaussetzern erschwert, durch eine Analyse der Schwingungen des Antriebsstrangs im Bereich von dessen Eigenfrequenzen erkannt wird. US 6,314,802 B1 beschreibt ebenfalls ein Verfahren zum Erkennen von Verbrennungsaussetzern, bei dem Fehler der Drehzahlerfassung multiplikativ und unter Verwendung von Standardabweichungskriterien kompensiert werden. US 5,499,537 beschäftigt sich mit der Erkennung von Verbrennungsaussetzern durch eine Analyse der Normalverteilung der Drehzahlschwankungen. DE 197 13 182 A1 offenbart ein Verfahren zur Drehzahlbestimmung aus Abgasdruckschwankungen mittels Frequenzanalyse.

Ausgehend von diesem Stand der Technik ist es die Aufgabe der Erfindung, ein bekanntes Verfahren, Computerprogramm und Steuergerät zum Bereinigen eines Drehzahlsignals durch Subtrahieren eines Torsionsschwingungs-Kompensationssignals derart weiterzubilden, dass sie jeweils eine präzisere Berechnung des Torsionsschwingungs-Kompensationssignals im Hinblick auf die durch das Kompensationssignal repräsentierten Torsionsschwingungen der Kurbelwelle ermöglichen.

Diese Aufgabe wird durch das in Patentanspruch beanspruchte Verfahren gelöst. Dieses ist dadurch gekennzeichnet, dass die Generierung des Torsionsschwingungs-Kompensationssignals folgende Schritte umfasst: Generieren von Spektralanteilen für das Torsionsschwingungs-Kompensationssignal, welche jeweils unterschiedliche Frequenzanteile der Torsionsschwingungen repräsentieren und Aufsummieren der Spektralanteile zu dem Torsionsschwingungs-Kompensationssignal.

### Vorteile der Erfindung

Jeder einzelne Spektralanteil repräsentiert, wie im Anspruch ausgeführt, jeweils einen individuellen Frequenzanteil der Torsionsschwingungen der Kurbelwelle der Brennkraftmaschine. Aufgrund dieser eindeutigen Zuordnung von Spektralanteil des zu generierenden Torsionsschwingungs-Kompensationssignals und Frequenzanteil der Torsionsschwingungen ist zunächst schon einmal eine sehr präzise Repräsentation der einzelnen Frequenzanteile durch die entsprechenden Spektralanteile möglich. Dies ist die Basis dafür, dass gemäß der Erfindung vorteilhafterweise auch dann die Summe der Spektralanteile, sprich das aktuell generierte Torsionsschwingungs-Kompensationssignal sämtliche Frequenzanteile und damit das gesamte Torsionsschwingungssignal sehr genau repräsentiert. Die Präzision des Torsionsschwingungs-Kompensationssignals hat ihrerseits aufgrund der Subtraktion des Kompensationssignals von dem Drehzahlsignal unmittelbare vorteilhafte Auswirkungen auf das durch die Subtraktion gebildete bereinigte Drehzahlsignal. Sowohl das bereinigte Drehzahlsignal wie auch eine auf Basis des bereinigten Drehzahlsignals durchgeführte Mengenausgleichs- oder Laufruhenregelung werden umso genauer, je genauer das Kompensationssignal die Torsionsschwingungen der Kurbelwelle repräsentiert.

Gemäß einem Ausführungsbeispiel der Erfindung werden für die Generierung jedes einzelnen Spektralanteils zunächst dessen Amplitude und Phase ermittelt durch Auswerten von geeigneten hinterlegten Kennfeldern im Hinblick auf die aktuelle Drehzahl der Kurbelwelle und auf die aktuell in die einzelnen Zylinder der Brennkraftmaschine eingespritzetn Kraftstoffmengen. Auf diese Weise ist es möglich, eine aktuelle Betriebsart der Brennkraftmaschine, wie zum Beispiel Schubbetrieb oder Normalbetrieb, bei der Generierung des Torsionsschwingungs-Kompensationssignals zu unterscheiden beziehungsweise zu berücksichtigen und das Kompensationssignal so zu generieren, dass es sehr präzise die Torsionsschwingungen auch in der jeweiligen Betriebsart der Brennkraftmaschine repräsentiert.

Eine noch weitere Präzisierung des Torsionsschwingungs-Kompensationssignals im Hinblick auf die von ihm repräsentierten Torsionsschwingungsanteile wird dadurch erreicht, dass der jeweils aktuelle Ladedruck der Brennkraftmaschine bei der Berechnung des Kompensationssignals beziehungsweise von dessen Spektralanteilen mit berücksichtigt wird.

Vorteilhafterweise erfolgt die Generierung der Kennlinienfelder für die Amplituden und Phasen der einzelnen Spektralanteile entweder durch Simulation oder durch experimentelle Vermessung einer Versuchs-Brennkraftmaschine. Wenn die Kennfelder durch Vermessen bei Betrieb der Versuchs-Brennkraftmaschine bei unterschiedlichen Betriebsarten gewonnen werden, ist es wichtig, dass die Versuchs-Brennkraftmaschine für jede Betriebsart in einen Referenzzustand gefahren wird, bei dem die in die einzelnen Zylinder der Versuchs-Brennkraftmaschine eingespritzte Kraftstoffmenge für alle Zylinder gleich groß ist. Dieser Referenzzustand gilt vorteilhafterweise dann als erreicht, wenn alle Zylinder einen gleich großen Mitteldruck aufweisen. Um diesen Zustand nachprüfen zu können, ist es erforderlich, eine Vollindizierung an der Versuchs-Brennkraftmaschine vorzunehmen, das heißt Drucksensoren für alle Zylinder vorzusehen.

Vorteilhafterweise lässt sich die vorliegende Erfindung nicht nur auf ein reines Drehzahlsignal, sondern stattdessen auch auf ein Segmentzeit-Signal anwenden, wie es von einem der Kurbelwelle zugeordneten Geberrad abgegriffen werden kann. Besonders vorteilhaft ist die Anwendung des erfindungsgemäßen Verfahrens auf einen vorzugsweise tiefpassgefilterten Wechselanteil dieses Segmentzeit-Signals.

Das erfindungsgemäß bereinigte Drehzahl- beziehungsweise Segmentzeit-Signal wird vorzugsweise zur Regelung der Laufruhe der Brennkraftmaschine und zur Mengenausgleichsregelung zum Ausgleichen der in die einzelnen Zylinder der Brennkraftmaschine eingespritzten Kraftstoffmengen verwendet. Damit kann eine Mengenausgleichsregelung bis hin zu höheren Drehmomenten der Brennkraftmaschine aktiviert werden, was ohne die vorliegende Erfindung infolge der Torsionsschwingungen nicht möglich wäre.

Die oben genannte Aufgabe wird weiterhin durch ein Computerprogramm und ein Steuergerät zum Durchführen des erfindungsgemäßen Verfahrens gelöst. Die Vorteile dieser Lösung entsprechen den oben mit Bezug auf das beanspruchte Verfahren genannten Vorteilen.

### Zeichnungen

Der Beschreibung sind insgesamt zwei Figuren beigefügt, wobei
- Figur 1: den Aufbau eines erfindungsgemäßen Steuergerätes; und
- Figur 2: den Aufbau einer erfindungsgemäßen Kompensationseinrichtung innerhalb des Steuergerätes aus Figur 1
zeigt.

### Beschreibung der Ausführungsbeispiele

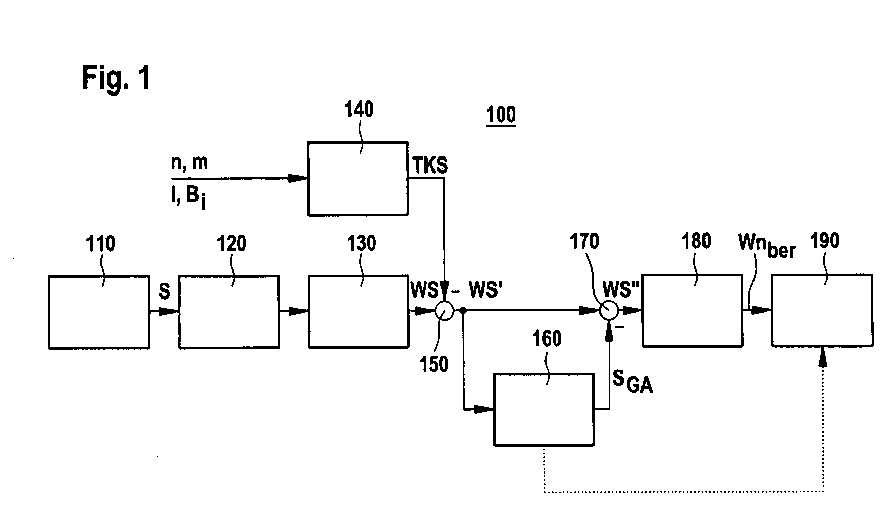

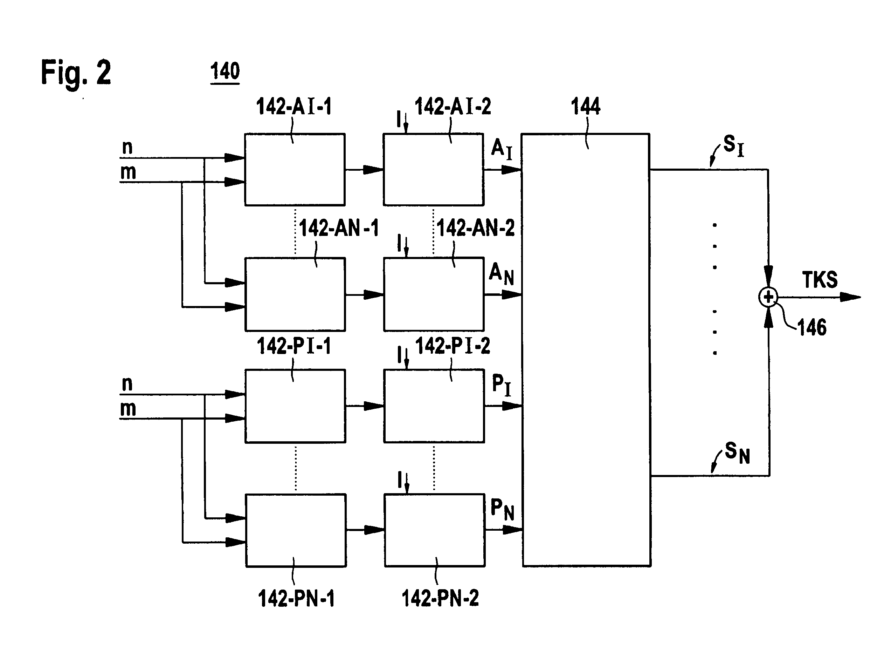

Figur 1 veranschaulicht den Aufbau eines erfindungsgemäßen Steuergerätes 100 für eine Brennkraftmaschine mit mehreren Zylindern (hier nicht gezeigt). Das Steuergerät 100 umfasst eine Sensoreinrichtung 110 zum Erfassen eines Drehzahlsignals, welches die aktuelle Drehzahl der Kurbelwelle der Brennkraftmaschine repräsentiert. Bei dem vorliegenden Ausführungsbeispiel ist die Sensoreinrichtung 110 als Geberrad auf der Kurbelwelle montiert und erzeugt deshalb ein Segmentzeit-Signal S, welches ebenfalls die aktuelle Drehzahl der Kurbelwelle - und insofern ein Drehzahlsignal im Sinne der Erfindung - repräsentiert. Der Sensoreinrichtung 110 nachgeschaltet ist ein Anti-Aliasing-Tiefpassfilter 120 zum Verhindern von Frequenzspiegelungen aufgrund des Aliasing-Effektes sowie ein weiteres Filter 130 zum Selektieren des Wechselanteils WS von dem tiefpassgefilterten Segmentzeit-Signal S. Der Wechselanteil WS des Segmentzeit-Signals wird dann erfindungsgemäß um die eventuell noch in ihm vorhandenen Torsionsschwingungsanteile der Kurbelwelle der Brennkraftmaschine bereinigt. Dies erfolgt mit Hilfe einer ersten Subtraktionseinrichtung 150, welche eine Subtraktion eines Torsionsschwingungs-Kompensationssignals TKS, welches die Torsionsschwingungen der Kurbelwelle repräsentiert, von dem Wechselanteil WS ermöglicht. Das Kompensationssignal TKS entspricht in seiner Amplitude den Amplituden der Torsionsschwingungen in dem Wechselanteil. Ist die Einrichtung 150 nicht als Subtraktions-, sondern als Additionseinrichtung ausgebildet, dann muss zusätzlich die Phase des Torsionsschwingungs-Kompensationssignals um 180° gegenüber der Phasenlage der Torsionsschwingungen in dem Wechselanteil verschoben sein, um eine Auslöschung der Torsionsschwingungen am Ausgang der Einrichtung 150 zu bewirken. Die Generierung des Torsionsschwingungs-Kompensationssignals TKS erfolgt mit Hilfe einer Kompensationseinrichtung 140 im Ansprechen auf verschiedene aktuelle Betriebsparameter der Brennkraftmaschine. Der Aufbau und die Funktionsweise dieser Kompensationseinrichtung 140 wird weiter unten unter Bezugnahme auf Figur 2 erläutert.

Gemäß Figur 1 wird der um die Torsionsschwingungen bereinigte Wechselanteil WS' des Segmentzeit-Signals S sowohl auf eine zweite Subtraktionseinrichtung 170 wie auch auf eine Geberrad-Adaptionseinrichtung 160 angegeben. Die Geberrad-Adaptionseinrichtung 160 dient zum Generieren eines Geberrad-Fehlersignals S_{GA}, welches Schwingungsanteile in dem Wechselanteil WS' aufgrund eventueller Unsymmetrien des Geberrades repräsentiert. Mit Hilfe der zweiten Subtraktionseinrichtung 170 werden diese Fehleranteile dann ebenfalls noch aus dem Wechselanteil eliminiert. Der auf diese Weise am Ausgang der zweiten Subtraktionseinrichtung 170 bereitgestellte zweifach bereinigte Wechselanteil WS" des Segmentzeit-Signals S wird dann einer Umformeinrichtung 180 zugeführt, welche diesen Wechselanteil des Segmentzeit-Signals S in einen Wechselanteil Wn_{ber} eines Drehzahlsignals umgewandelt wird. Dieser bereinigte Wechselanteil des Drehzahlsignals dient dann zum Beispiel als Eingangsgröße für eine Laufruhenregelung 190 der Brennkraftmaschine innerhalb des Steuergerätes 100. Diese Laufruhenregelung 190 wird vorzugsweise von der Geberrad-Adaptionseinrichtung 160 initialisiert.

Figur 2 zeigt den Aufbau der oben bereits erwähnten erfindungsgemäßen Kompensationseinrichtung 140 zur Generierung des Torsionsschwingungs-Kompensationssignals TKS. Die Kompensationseinrichtung 140 ist so aufgebaut, dass sie zunächst die Amplituden Aₖ und Phasen Pₖ für einzelne Spektralanteile S_{K} des zu generierenden Kompensationssignals TKS ermittelt mit jeweils k = I, II, III,...,N, und dann aus den Amplituden und Phasen die jeweiligen Spektralanteile generiert, um diese dann mit Hilfe einer Additionseinrichtung 146 zu dem gesuchten Kompensationssignal TKS aufzusummieren.

Die Generierung der Amplituden und Phasen für die einzelnen Spektralanteile erfolgt in jeweils eigenen individuellen Bearbeitungspfaden Aₖ, Pₖ mit jeweils k = I, II, III...N. Die Anzahl der Pfade zur Amplitudengenerierung ist identisch mit der Anzahl der Bearbeitungspfade zur Phasengenerierung und diese Anzahl entspricht bei mehrzylindrigen Maschinen vorzugsweise der halben Zylinderzahl, abgerundet auf eine ganze Zahl; für eine 4-Zylinder-Brennkraftmaschine sind deshalb jeweils zwei Pfade zur Amplitudengenerierung und zwei Pfade zur Phasengenerierung erforderlich; für eine 6-Zylinder-Brennkraftmaschine ergeben sich demnach jeweils drei Pfade. Die Anzahl der Amplitudenpfade beziehungsweise die Anzahl der Phasenpfade entspricht der Anzahl der Spektralanteile S_{K}, die später zu dem Kompensationssignal TKS aufsummmiert werden. Jeder dieser Spektralanteile repräsentiert die Torsionsschwingungsanteile der Kurbelwelle bei einem anderen Vielfachen der Nockenwellenfrequenz der Brennkraftmaschine.

Die einzelnen Pfade zur Bestimmung der Amplituden und Phasen der Spektralanteile sind im Wesentlichen gleich aufgebaut. Je nachdem, ob es sich um einen Pfad zur Amplitudengenerierung oder einen Pfad zur Phasengenerierung handelt, weisen diese Pfade zunächst ein Amplituden-Kennfeld 142-AI-1...142-AN-1 beziehungsweise ein Phasenkennfeld 142-PI-1...142-PN-1 auf. Die Kennfelder sind jeweils frequenzselektiv ausgebildet, das heißt auf dasjenige Vielfache der Nockenwellenfrequenz spezifiziert, für dessen Spektralanteil mit dem jeweiligen Pfad jeweils die entsprechende Amplitude oder Phase gebildet werden soll. Sowohl die Amplituden- wie auch die Phasenkennfelder empfangen als Eingangsgrößen jeweils die aktuelle Drehzahl n der Brennkraftmaschine sowie die jeweils in die einzelnen Zylinder der Brennkraftmaschine eingespritzten individuellen Kraftstoffmengen m. Aus diesen Eingangsgrößen wird dann innerhalb der Kompensationseinrichtung 140 mit Hilfe der Amplitudenkennfelder 142-AI-1...142-AN-1 ein Vorabwert für die Amplitude des jeweiligen Spektralanteils S_{K} generiert. Aus diesem Vorabwert wird dann in jedem einzelnen Pfad getrennt die Amplitude A_{I}, A_{N} für den jeweiligen Spektralanteil dadurch generiert, dass der Einfluss des Ladedruckes l der Brennkraftmaschine auf die Amplitudenberechnung berücksichtigt beziehungsweise herausgerechnet wird. Diese Ladedruckkorrektur ist optional; sie dient jedoch einer weiteren Präzisierung der Amplituden der Spektralanteile.

Analog zu der soeben beschriebenen Berechnung der Amplituden erfolgt die Berechnung der Phasen P_{I}, P_{N} der einzelnen Spektralanteile S_{K}. Auch hier stehen am Ausgang der frequenzspezifischen Phasenkennfelder 142-PI-1, 142-PN-1 zunächst nur grobe Vorabwerte für die Phasen der einzelnen Spektralanteile zur Verfügung. Auch diese Phasenvorabwerte werden dann nachfolgend um die Einflüsse des Ladedrucks l der Brennkraftmaschine auf diese Vorabwerte korrigiert, um dann am Ausgang der Ladedruck-Korrekturblöcke 142-PI-2, 142-PN-2 die gesuchten Phasenwerte P_{I}, P_{N} für die einzelnen Spektralanteile S_{K} zu erhalten. Die so generierten Amplituden und Phasen für die einzelnen Spektralanteile des zu generierenden Kompensationssignals TKS werden dann innerhalb der Kompensationseinrichtung 140 einem Signalprozessor 144 als Eingangsgrößen zugeführt, welcher aus diesen Eingangsgrößen die gesuchten Spektralanteile S_{K} in Form eines Zeitsignals, zum Beispiel in der Form A_{I}·sin(ωt - P_{I}) berechnet. Die Berechnung erfolgt typischerweise mit Hilfe des bekannten mathematischen Verfahrens der inversen Fast Fourier Transformation FFT. Zur Generierung des gesuchten Torsionsschwingungs-Kompensationssignals TKS werden diese Spektralanteile dann, wie bereits oben erwähnt, mit Hilfe der Additionseinrichtung 146 aufaddiert.

Die besagten Amplituden und Phasenkennfelder 142-AI-1...142-AN-1, 142-PI-1...142-PN-1 sind typischerweise für jede Betriebsart der Brennkraftmaschine, wie zum Beispiel für Schubbetrieb oder Normalbetrieb, für Regenerationsbetrieb zur Abgasnachbehandlung oder für Homogen- oder Teilhomogenbetrieb, jeweils spezifisch ausgebildet. Für eine Verwendung der Erfindung bei einem regulären Betrieb der Brennkraftmaschine, bei dem typischerweise grundsätzlich alle der genannten Betriebsarten vorkommen können, ist es deshalb erforderlich, verschiedene Sätze der Amplituden- und Phasenkennfelder für alle relevanten Betriebsarten der Brennkraftmaschine in dem Steuergerät zu hinterlegen.

Die Applikation der Kennfelder kann entweder durch Simulation oder durch Vermessung einer Versuchs-Brennkraftmaschine erfolgen.

Bei einer Simulation muss nicht nur das Verhalten der Brennkraftmaschine und deren Kurbelwelle, sondern auch eine jeweils vorgesehene Anwendung für das bereinigte Drehzahlsignal, beispielsweise eine Mengenausgleichsregelung oder eine Laufruhenregelung für die Brennkraftmaschine modelliert werden. Vorzugsweise wird bei der Simulation auch der Einfluss des jeweils aktuellen Ladedruckes 1 der Brennkraftmaschine auf die Torsionsschwingungen berücksichtigt.

Genauere Kennfelder als die durch Simulation ermittelten können durch die erwähnte Vermessung von Versuchs-Brennkraftmaschinen ermittelt werden. Dafür muss die Versuchs-Brennkraftmaschine mit Indiziertechnik (Vollindizierung) auf einem Prüfstand beim Betrieb in unterschiedlichen Betriebsarten vermessen werden. Die Indiziertechnik erlaubt das messtechnische Erfassen von Drücken in den einzelnen Zylindern der Brennkraftmaschine. Mit ihrer Hilfe wird die Brennkraftmaschine in einen Referenzzustand gefahren, der sich dadurch auszeichnet, dass die in die einzelnen Zylinder eingespritzten Kraftstoffmengen für alle Zylinder gleich sind, das heißt es treten keine zylinderindividuellen Mengenfehler auf. Die Einstellung dieses Referenzzustandes erfolgt von Hand durch Eingriff in eine Mengenausgleichsregelung-Korrektur. Der Referenzzustand gilt dann als erreicht, wenn alle Zylinder den gleichen indizierten Mitteldruck aufweisen. Die auf diese Weise für die Versuchs-Brennkraftmaschinen ermittelten Kennfelder können dann zur Generierung des Torsionsschwingungs-Kompensationssignals bei Brennkraftmaschinen gleichen Typs übernommen werden.

Das erfindungsgemäße Verfahren beziehungsweise die erfindungsgemäß beschriebene Vorgehensweise zur Generierung des Torsionsschwingungs-Kompensationssignals TKS wird vorzugsweise in Form eines Computerprogramms für ein Steuergerät für eine Brennkraftmaschine realisiert. Das Computerprogramm kann gegebenenfalls zusammen mit weiteren Computerprogrammen auf einem computerlesbaren Datenträger abgespeichert sein. Bei den Daten kann es sich um eine Diskette, eine Compact Disc, einen sogenannten Flash-Memory oder dergleichen handeln. Das auf dem Datenträger abgespeicherte Computerprogramm kann dann als Produkt an einen Kunden verkauft werden. Eine Übertragung an den Kunden ist auch ohne die Zuhilfenahme des Datenträgers, zum Beispiel über ein elektronisches Kommunikationsnetzwerk, insbesondere das Internet, möglich.

## Patentansprüche

1. Verfahren zum Bereinigen eines Drehzahlsignals, welches die aktuelle Drehzahl der Kurbelwelle einer Brennkraftmaschine repräsentiert, durch Subtrahieren eines jeweils aktuell generierten Torsionsschwingungs-Kompensationssignals (TKS), welches Torsionsschwingungen der Kurbelwelle repräsentiert, von dem Drehzahlsignal; **dadurch gekennzeichnet, dass** die Generierung des Torsionsschwingungs-Kompensationssignals (TKS) folgende Schritte umfasst: Generieren von Spektralanteilen für das Torsionsschwingungs-Kompensationssignals (TKS), welche jeweils unterschiedliche Frequenzanteile der Torsionsschwingungen repräsentieren; und Aufsummieren der Spektralanteile zu dem Torsionsschwingungs-Kompensationssignal (TKS).

2. Verfahren nach Anspruch 1, **dadurch gekennzeichnet, dass** die Generierung jedes einzelnen der Spektralanteile des Torsionsschwingungs-Kompensationssignals (TKS) folgende Schritte umfasst:
Generieren einer Frequenzdarstellung in Form einer Amplitude (A_{I}, ...A_{N}) und einer Phase (P_{I}...P_{N}) für den Spektralanteil durch Auswerten von hinterlegten Amplituden- und Phasen-Kennfeldern (142-AI-1,..., 142-AN-1; 142-PI-1,..., 142-PN-1) im Ansprechen auf die aktuelle Drehzahl (n) der Kurbelwelle und auf die aktuell in die einzelnen Zylinder der Brennkraftmaschine eingespritzten Kraftstoffmengen (m); und
Umwandeln der Frequenzdarstellung des Spektralanteils in ein aufsummierbares Zeitsignal.

3. Verfahren nach Anspruch 2, **dadurch gekennzeichnet, dass** die Generierung der Amplitude und der Phase für die einzelnen Spektralanteile des Torsionsschwingungs-Kompensationssignals (TKS) jeweils unter Berücksichtigung des Einflusses des aktuellen Ladedrucks (1) der Brennkraftmaschine auf die Torsionsschwingungen erfolgt.

4. Verfahren nach Anspruch 2 oder 3, **dadurch gekennzeichnet, dass** die Amplituden- und Phasenkennfelder (142-AI-1,..., 142-AN-1; 142-PI-1,..., 142-PN-1) durch Simulation gelernt werden, wobei in der Simulation nicht nur das Verhalten der Brennkraftmaschine und deren Kurbelwelle, sondern auch eine jeweils vorgesehene Anwendung für das bereinigte Drehzahlsignal (n_{ber}), beispielsweise eine Mengenausgleichsregelung oder eine Laufruheregelung (190) für die Brennkraftmaschine, modelliert wird.

5. Verfahren nach Anspruch 4, **dadurch gekennzeichnet, dass** in der Simulation weiterhin eine Abhängigkeit der Torsionsschwingungen von dem jeweils aktuellen Ladedruck (1) mit berücksichtigt wird.

6. Verfahren nach Anspruch 2 oder 3, **dadurch gekennzeichnet, dass** die Amplituden- und Phasenkennfelder (142-AI-1,..., 142-AN-1; 142-PI-1,..., 142-PN-1) durch Vermessen der Brennkraftmaschine bei Betrieb in mindestens einer Betriebsart (Bᵢ), wie zum Beispiel Regenerationsbetrieb zur Abgasnachbehandlung, Homogen/Teilhomogenbetrieb, Normalbetrieb, insbesondere unter Last auf einem Prüfstand gelernt werden, wobei die Brennkraftmaschine für jede Betriebsart in einen Referenzzustand gefahren wird, bei dem die in die einzelnen Zylinder der Brennkraftmaschine eingespritzte Kraftstoffmenge für alle Zylinder gleich groß ist.

7. Verfahren nach Anspruch 6, **dadurch gekennzeichnet, dass** der Referenzzustand dann als erreicht gilt, wenn alle Zylinder einen gleichen indizierten Mitteldruck aufweisen.

8. Verfahren nach einem der Ansprüche 2 bis 7, **dadurch gekennzeichnet, dass** die Spektralanteile (f_{I}...f_{N}) jeweils im Bereich ganzzahliger Vielfacher der Nockenwellenfrequenz der Brennkraftmaschine liegen und dass die Anzahl der zur Generierung des Torsionsschwingungs-Kompensationssignals (TKS) aufsummierten Spektralanteile vorzugsweise der halben Anzahl der Zylinder der mehrzylindrigen Brennkraftmaschine, abgerundet auf eine ganze Zahl, entspricht.

9. Verfahren nach einem der vorangegangenen Ansprüche, **dadurch gekennzeichnet, dass** es sich bei dem Drehzahlsignal um ein Segmentzeit-Signal (S) handelt, wie es von einem der Kurbelwelle zugeordneten Geberrad abgegriffen wird, vorzugsweise um dessen tiefpassgefilterten Wechselanteil (WS).

10. Computerprogramm für ein Steuergerät (100) einer Brennkraftmaschine, **dadurch gekennzeichnet, dass** das Computerprogramm ausgebildet ist zum Durchführen des Verfahrens nach einem der Ansprüche 1 bis 9.

11. Verwendung eines nach einem der Ansprüche 1 bis 9 generierten bereinigten Drehzahlsignals (n_{ber}) zum Regeln der Laufruhe einer Brennkraftmaschine.

12. Steuergerät (100) für eine Brennkraftmaschine mit mehreren Zylindern, umfassend:
- eine Sensoreinrichtung (110) zum Erfassen eines Drehzahlsignals, welches die aktuelle Drehzahl der Kurbelwelle einer Brennkraftmaschine repräsentiert, wobei dieses Drehzahlsignal gegebenenfalls auch Torsionsschwingungsanteile umfasst, welche Torsionsschwingungen der Kurbelwelle der Brennkraftmaschine repräsentieren;
- eine Kompensationseinrichtung (140) zum Generieren eines Torsionsschwingungs-Kompensationssignals (TKS), welches die Torsionsschwingungen der Kurbelwelle repräsentiert; und
- Subtraktionseinrichtung (150) zum Bereinigen des Drehzahlsignals von den unerwünschten Torsionsschwingungsanteilen durch Subtrahieren des Torsionsschwingungs-Kompensationssignals (TKS) von dem Drehzahlsignal;
**dadurch gekennzeichnet, dass**
die Kompensationseinrichtung (140) ausgebildet ist, das Torsionsschwingungs-Kompensationssignal (TKS) **dadurch** zu generieren, dass sie zunächst Spektralanteile für das Torsionsschwingungs-Kompensationssignal (TKS) generiert, welche jeweils unterschiedliche Frequenzanteile der Torsionsschwingungen repräsentieren, und nachfolgend diese Spektralanteile zu dem Torsionsschwingungs-Kompensationssignal aufaddiert.

13. Steuergerät (100) nach Anspruch 12, **gekennzeichnet durch** eine Mengenausgleichsregelung zum Regeln der in die Zylinder der Brennkraftmaschine eingespritzten Kraftstoffmenge (m) auf ein gleiches Niveau und/oder eine Laufruhenregelung (190) zum Regeln der Laufruhe der Brennkraftmaschine im Ansprechen auf das bereinigte Drehzahlsignal (n_{ber}).

## Claims

1. Method for conditioning a rotational speed signal which represents the current rotational speed of the crankshaft of an internal combustion engine, by subtracting a respectively currently generated torsional vibration compensation signal (TKS) which represents torsional vibrations of the crankshaft, from the rotational speed signal,
**characterized in that** the generation of the torsional vibration compensation signal (TKS) comprises the following steps: generation of spectral components for the torsional vibration compensation signal (TKS) which respectively represent different frequency components of the torsional vibrations, and summing of the spectral components to form the torsional vibration compensation signal (TKS).

2. Method according to Claim 1, **characterized in that** the generation of each individual spectral component of the spectral components of the torsional vibration compensation signal (TKS) comprises the following steps:
generation of a frequency representation in the form of an amplitude (A_{I},...A_{N}) and a phase (P_{I}...P_{N}) for the spectral component by evaluating stored amplitude and phase characteristic diagrams (142-AI-1,..., 142-AN-1; 142-PI-1,..., 142-PN-1) in response to the current rotational speed (n) of the crankshaft and to the fuel quantities (m) currently injected into the individual cylinders of the internal combustion engine; and
conversion of the frequency representation of the spectral component into a time signal which can be summed.

3. Method according to Claim 2, **characterized in that** the amplitude and the phase for the individual spectral components of the torsional vibration compensation signal (TKS) are respectively generated taking into account the influence of the current charging pressure (1) of the internal combustion engine on the torsional vibrations.

4. Method according to Claim 2 or 3, **characterized in that** the amplitude and phase characteristic diagrams (142-AI-1,..., 142-AN-1; 142-PI-1,..., 142-PN-1) are learnt by simulation, wherein not only the behaviour of the internal combustion engine and its crankshaft but also a respectively provided application for the conditioned rotational speed signal (n_{ber}), for example a quantity compensation controller or a smooth running controller (190) for the internal combustion engine, are modelled in the simulation.

5. Method according to Claim 4, **characterized in that** a dependence of the torsional vibrations on the respective current charging pressure (1) is also taken into account in the simulation.

6. Method according to Claim 2 or 3, **characterized in that** the amplitude and phase characteristic diagrams (142-AI-1,..., 142-AN-1; 142-PI-1,..., 142-PN-1) are learnt by measuring the internal combustion engine duration operation in at least one operating mode (Bᵢ), such as for example regenerative mode for the posttreatment of exhaust gas, homogeneous/partially homogeneous mode, normal mode, in particular under load on a test bench, wherein for each operating mode the internal combustion engine is placed in a reference state in which the quantity of fuel which is injected into the individual cylinders of the internal combustion engine is of the same magnitude for all the cylinders.

7. Method according to Claim 6, **characterized in that** the reference state is considered to have been reached if all the cylinders have an identically indexed mean pressure.

8. Method according to one of Claims 2 to 7, **characterized in that** the spectral components (f_{I}...f_{N}) each lie in the range of integral multiples of the cam shaft frequency of the internal combustion engine, and **in that** the number of spectral components which are summed to generate the torsional vibration compensation signal (TKS) preferably corresponds to half the number of cylinders of the multi-cylinder internal combustion engine, rounded to an integer.

9. Method according to one of the preceding claims, **characterized in that** the rotational speed signal is a segment time signal (S), such as is tapped by a sensor wheel assigned to the crankshaft, and is preferably its low-pass-filtered alternating component (WS).

10. Computer program for a control unit (100) of an internal combustion engine, **characterized in that** the computer program is designed to carry out the method according to one of Claims 1 to 9.

11. Use of a conditioned rotational speed signal (n_{ber}), generated according to one of Claims 1 to 9, for controlling the smooth running of an internal combustion engine.

12. Control unit (100) for an internal combustion engine having a plurality of cylinders, comprising:
- a sensor device (110) for sensing a rotational speed signal which represents the current rotational speed of the crankshaft of an internal combustion engine, wherein this rotational speed signal also, if appropriate, comprises torsional vibration components which represent torsional vibrations of the crankshaft of the internal combustion engine;
- a compensation device (140) for generating a torsional vibration compensation signal (TKS) which represents the torsional vibrations of the crankshaft; and
- subtraction device (150) for removing undesired torsional vibration components from the rotational speed signal by subtracting the torsional vibration compensation signal (TKS) from the rotational speed signal;
**characterized in that**
the compensation device (140) is designed to generate the torsional vibration compensation signal (TKS) by firstly generating spectral components for the torsional vibration compensation signal (TKS), which spectral components respectively represent different frequency components of the torsional vibrations, and subsequently adding these spectral components to the torsional vibration compensation signal.

13. Control unit (100) according to Claim 12, **characterized by** a quantity compensation controller for adjusting the quantity (m) of fuel injected into the cylinders of the internal combustion engine to the same level, and/or a smooth running controller (190) for adjusting the smooth running of the internal combustion engine in response to the conditioned rotational speed signal (n_{ber}).

## Revendications

1. Procédé de nettoyage d'un signal de vitesse de rotation qui représente la vitesse de rotation instantanée de l'arbre de vilebrequin d'un moteur à combustion interne en soustrayant du signal de vitesse de rotation un signal (TKS) de compensation des oscillations en torsion produit au même instant et qui représente les oscillations en torsion de l'arbre de vilebrequin,
**caractérisé en ce que**
la production du signal (TKS) de compensation des oscillations en torsion comprend les étapes suivantes :
formation des fractions spectrales du signal (TKS) de compensation des oscillations en torsion qui représentent chacune une plage de fréquences différente des oscillations en torsion et
addition des fractions spectrales pour obtenir le signal (TKS) de compensation des oscillations en torsion.

2. Procédé selon la revendication **1, caractérisé en ce que** la formation de chacune des fractions spectrales du signal (TKS) de compensation des oscillations en torsion comprend les étapes suivantes :
formation d'une représentation en fréquence sous la forme d'une amplitude (A_{I},...A_{N}) et d'une phase (P_{I},...P_{N}) de la fraction spectrale par évaluation de champs de caractéristiques d'amplitude et de phase (142-AI-1, ..., 142-AN-1 ; 142-PI-1, ..., 142-PN-1) conservés en mémoire en réponse à la vitesse de rotation instantanée (n) de l'arbre de rotation et de la quantité de carburant (m) injectée au même moment dans les différents cylindres du moteur à combustion interne et
conversion de la représentation en fréquence de la fraction spectrale en un signal temporel additionnable.

3. Procédé selon la revendication 2, **caractérisé en ce que** la formation de l'amplitude et de la phase des différentes fractions spectrales du signal (TKS) de compensation des oscillations en torsion s'effectue chaque fois en tenant compte de l'influence de la pression instantanée de suralimentation (1) du moteur à combustion interne sur les oscillations en torsion.

4. Procédé selon la revendication 2 ou 3, **caractérisé en ce que** les champs de caractéristiques d'amplitude et de phase (142-AI-1, ..., 142-AN-1 ; 142-PI-1, ..., 142-PN-1) sont enseignés par simulation, la simulation modélisant non seulement le comportement du moteur à combustion interne et de son arbre de vilebrequin mais également l'utilisation prévue dans chaque cas du signal de vitesse de rotation nettoyé (n_{ber}), par exemple une régulation d'équilibrage de quantité ou une régulation de ralenti (190) du moteur à combustion interne.

5. Procédé selon la revendication 4, **caractérisé en ce que** la simulation tient en outre compte de la dépendance des oscillations en torsion vis-à-vis de la pression instantanée de suralimentation (1).

6. Procédé selon la revendication 2 ou 3, **caractérisé en ce que** les champs de caractéristiques d'amplitude et de phase (142-AI-1, ..., 142-AN-1 ; 142-PI-1, ..., 142-PN-1) sont enseignés par prise de mesures sur le moteur à combustion interne pendant qu'il fonctionne en au moins un mode de fonctionnement (Bᵢ), par exemple un mode de régénération destiné au traitement des gaz d'échappement, un mode homogène/partiellement homogène, le mode normal, en particulier en charge et au banc d'essai, le moteur à combustion interne étant amené dans chaque mode de fonctionnement à un état de référence dans lequel la quantité de carburant injectée dans les différents cylindres du moteur à combustion interne est identique pour tous les cylindres.

7. Procédé selon la revendication 6, **caractérisé en ce que** l'état de référence est considéré comme atteint lorsque tous les cylindres présentent la même pression moyenne indiquée.

8. Procédé selon l'une des revendications 2 à 7, **caractérisé en ce que** les fractions spectrales (f_{I}...f_{N}) sont toutes situées dans la plage des multiples entiers de la fréquence de l'arbre à cames du moteur à combustion interne et **en ce que** le nombre des fractions spectrales additionnées pour former le signal (TKS) de compensation des oscillations en torsion correspond de préférence à la moitié du nombre des cylindres du moteur à combustion interne à plusieurs cylindres, arrondi à un nombre entier.

9. Procédé selon l'une des revendications précédentes, **caractérisé en ce que** le signal de vitesse de rotation est un signal temporel segmenté (S) saisi par une roue de détection associée à l'arbre de vilebrequin et de préférence sa fraction alternative (WS) filtrée passe-bas.

10. Programme informatique pour un appareil de commande (100) d'un moteur à combustion interne,
**caractérisé en ce que**
le programme informatique est configuré de manière à exécuter le procédé selon l'une des revendications 1 à 9.

11. Utilisation d'un signal de vitesse de rotation nettoyé (n_{ber}) formé selon l'une des revendications 1 à 9, en vue de réguler le fonctionnement de ralenti d'un moteur à combustion interne.

12. Appareil de commande (100) pour moteur à combustion interne à plusieurs cylindres, comprenant :
- un dispositif de détection (110) qui détecte un signal de vitesse de rotation qui représente la vitesse de rotation instantanée de l'arbre de vilebrequin du moteur à combustion interne, ce signal de vitesse de rotation comprenant éventuellement aussi des fractions d'oscillations en torsion qui représentent les oscillations en torsion de l'arbre de vilebrequin du moteur à combustion interne,
- un dispositif de compensation (140) qui forme un signal (TKS) de compensation des oscillations en torsion qui représente les oscillations en torsion de l'arbre de vilebrequin et
- un dispositif de soustraction (150) qui nettoie le signal de vitesse de rotation des fractions indésirables des oscillations en torsion en soustrayant du signal de vitesse de rotation le signal (TKS) de compensation des oscillations en torsion,
**caractérisé en ce que**
le dispositif de compensation (140) est configuré de manière à former le signal (TKS) de compensation des oscillations en torsion en formant d'abord les fractions spectrales du signal (TKS) de compensation des oscillations en torsion qui représentent chacune différentes plages de fréquences des oscillations en torsion et en ajoutant ensuite ces fractions spectrales au signal de compensation des oscillations en torsion.

13. Appareil de commande (100) selon la revendication 12, **caractérisé par** une régulation d'équilibrage de quantité qui régule à un niveau identique la quantité de carburant (m) injectée dans les cylindres du moteur à combustion interne et/ou par une régulation (190) du fonctionnement de ralenti qui régule le fonctionnement de ralenti du moteur à combustion interne en réaction au signal de vitesse de rotation nettoyé (n_{ber}).
